# EUROPEAN PATENT SPECIFICATION

(11) **EP 2 693 789 B1**
(45) Date of publication and mention of the grant of the patent: **25.12.2019**
(21) Application number: 12765671.8
(22) Date of filing: 31.03.2012
(51) Int. Cl.: H04W 12/06, H04L 29/06, H04W 12/02, G06F 21/60, H04W 12/04

(54) **MOBILE TERMINAL ENCRYPTION METHOD, HARDWARE ENCRYPTION DEVICE AND MOBILE TERMINAL**
VERSCHLÜSSELUNGSVERFAHREN FÜR MOBILE ENDGERÄTE, HARDWAREVERSCHLÜSSELUNGSVORRICHTUNG UND MOBILES ENDGERÄT
PROCÉDÉ DE CHIFFREMENT DE TERMINAL MOBILE, DISPOSITIF DE CHIFFREMENT DE MATÉRIEL ET TERMINAL MOBILE

(30) Priority: 31.03.2011 CN 201110080745
(43) Date of publication of application: 05.02.2014
(73) Proprietor: Huawei Device Co., Ltd., Dongguan, Guangdong 523808 (CN)
(72) Inventor: HUI, Ying, Shenzhen Guangdong 518129 (CN); HE, Yongquan, Shenzhen Guangdong 518129 (CN)
(74) Representative: Isarpatent
(86) International application number: PCT/CN2012/073368
(87) International publication number: WO 2012/130167

(56) References cited:
- WO-A1-2010/148778
- CN-A- 1 913 680
- CN-A- 101 605 326
- CN-A- 102 131 190
- FR-A1- 2 864 276
- US-A1- 2007 094 507
- EIMEAR GALLERY ET AL: "Trusted Mobile Platforms", 18 August 2007 (2007-08-18), FOUNDATIONS OF SECURITY ANALYSIS AND DESIGN IV; [LECTURE NOTES IN COMPUTER SCIENCE], SPRINGER BERLIN HEIDELBERG, BERLIN, HEIDELBERG, PAGE(S) 282 - 323, XP019099702, ISBN: 978-3-540-74809-0 * abstract * * Sections 5, 6 and subsections Sections 7.3 and 9 and subsections *
- GEHRMANN C ET AL: "MOBILE PLATFORM SECURITY", ERICSSON REVIEW (INCL. ON), TELEFONAKTIEBOLAGET L M ERICSSON, SE, no. 2, 1 January 2006 (2006-01-01), pages 59-70, XP001501603, ISSN: 0014-0171

## Description

### TECHNICAL FIELD

The present invention belongs to the field of mobile communications technologies, and in particular, relates to a mobile terminal encryption method, a hardware encryption device, and a mobile terminal.

### BACKGROUND

At present, most encryption methods protect only data or files stored in a mobile terminal but cannot protect key data such as network locking information about mobile terminals. Therefore, after mobile terminal products are sold to different markets, board software or data may be easily acquired or tampered by a hacker.

Document "Trusted Mobile Platforms" (EIMER GALLERY et al.) discloses a trusted mobile platform. In a secure SIMLock using trusted computing, personalisation code/code groups, personalisation indicators and control keys could simply be sealed to an isolated execution environment which hosts a device personalisation agent. In this way, security-critical data can be both integrity and confidentiality-protected while in storage. If the personalisation agent, and/or the supporting environment to which the data is sealed, is modified, then the security-critical data will be inaccessible.

### SUMMARY

The present invention provides a mobile terminal encryption method, a hardware encryption device, and a mobile terminal, which can prevent a hacker from easily acquiring or tampering key data in the mobile terminal.

Embodiments of the present invention adopt the following technical solutions.

A mobile terminal encryption data loading method includes:
performing, according to the authentication data, authentication between the hardware encryption device and a main control chip of a mobile terminal, wherein the hardware encryption device stores encryption data and the authentication data, wherein the encryption data comprises network locking segment information of operators for implementing a SIM card locking function of the mobile terminal, wherein the authentication data comprises board software summary information about the mobile terminal; and
the performing, according to stored authentication data, authentication between a hardware encryption device and a main control chip of a mobile terminal comprises:
   comparing, by the hardware encryption device, stored board software summary information with the board software summary information about the mobile terminal calculated by the main control chip; and
   determining the authentication succeeds if the comparison is correct, and determining the authentication fails if the comparison is incorrect;
   permitting, by the hardware encryption device, the main control chip to load the encryption data if the authentication succeeds; and prohibiting, by the hardware encryption device, the main control chip from loading the encryption data if the authentication fails.

A hardware encryption device includes:
an authentication unit, configured to authenticate with a main control chip of a mobile terminal according to the authentication data stored by the storage unit; and
a control unit, configured to permit the main control chip to load the encryption data stored in the storage unit if the authentication succeeds, and prohibit the main control chip from loading the encryption data stored in the storage unit if the authentication fails.

A mobile terminal includes a main control chip and the hardware encryption device, where the main control chip is configured to authenticate with the hardware encryption device and to load the encryption data stored in the hardware encryption device after the authentication succeeds;
wherein the encryption data stored in the storage unit comprises: network locking segment information of operators for implementing a SIM card locking function of the mobile terminal;
wherein the authentication data stored in the storage unit comprises: board software summary information about the mobile terminal; and
the authentication unit is specifically configured to compare board software summary information stored in the storage unit with the board software summary information about the mobile terminal calculated by the main control chip of the mobile terminal; and
determine the authentication succeeds if the comparison is correct, and determine the authentication fails if the comparison is incorrect.

As can be known from the technical solutions of the preceding embodiments of the present invention, authentication data and encryption data are stored in a hardware encryption device, and authentication is performed between the hardware encryption device and with a main control chip of a mobile terminal each time the mobile terminal starts Only when the authentication succeeds, the hardware encryption device permits the main control chip to load the encryption data. Therefore, terminal manufactures and operators may save key data of the mobile terminal as encryption data in the hardware encryption device according to different requirements, and protect the key data of the mobile terminal by using a hardware encryption technology, thereby achieving the objective of preventing a hacker from easily acquiring or tampering the key data of the mobile terminal.

### BRIEF DESCRIPTION OF DRAWINGS

To illustrate the technical solutions of the present invention more clearly, the following simply introduces the accompanying drawings that are required in the description of the embodiments.
FIG. 1 is a schematic flowchart of a mobile terminal encryption method according to an embodiment of the present invention;
FIG. 2 is a schematic diagram of an authentication method according to an embodiment of the present invention;
FIG. 3 is a schematic diagram of another authentication method according to an embodiment of the present invention;
FIG. 4 is a schematic diagram of functional units of a hardware encryption device according to an embodiment of the present invention; and
FIG. 5 is a schematic structural diagram of a mobile terminal according to an embodiment of the present invention.

### DESCRIPTION OF EMBODIMENTS

For ease of understanding, the technical solutions provided in the embodiments of the present invention are hereinafter described clearly and completely with reference to the accompanying drawings. Evidently, the embodiments described below are only part of the embodiments, rather than all of the embodiments. All other embodiments obtained by persons of ordinary skill in the art based on the embodiments of the present invention without creative efforts shall fall within the protection scope of the present invention.

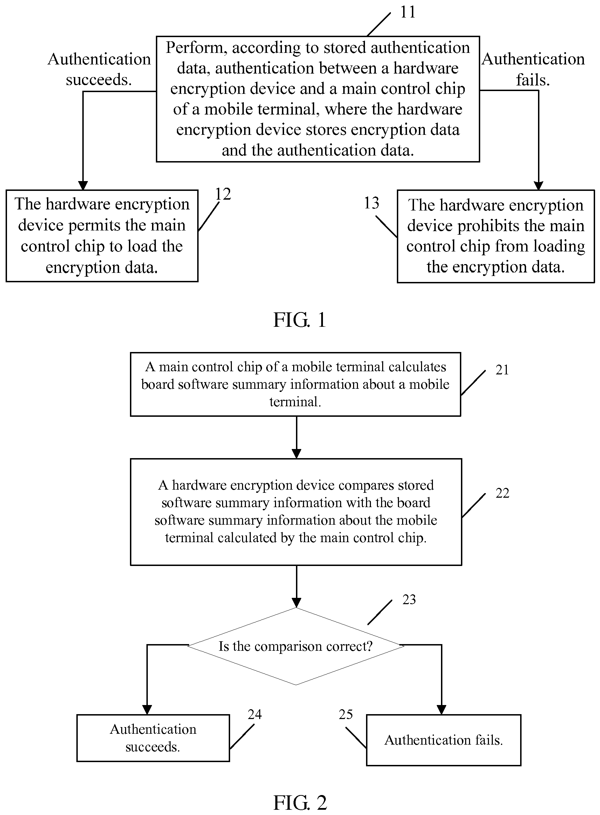

As shown in FIG. 1, an embodiment of the present invention provides a mobile terminal encryption method, including:
Step 11: Perform, according to stored authentication data, authentication between a hardware encryption device and a main control chip of a mobile terminal, where the hardware encryption device stores encryption data and the authentication data.
Step 12: If the authentication succeeds, the hardware encryption device permits the main control chip to load the encryption data.
Step 13: If the authentication fails, the hardware encryption device prohibits the main control chip from loading the encryption data.

From the preceding, it may be known that, terminal manufactures and operators may save key data of the mobile terminal as encryption data in the hardware encryption device according to different requirements, and protect the key data of the mobile terminal by using a hardware encryption technology, thereby achieving the objective of preventing a hacker from easily acquiring or tampering the key data of the mobile terminal.

It should be pointed out that, the encryption data stored in the hardware encryption device may be determined according to different encryption requirements and may include but is not limited to the following information:
(1) Important program codes for implementing normal startup of the mobile terminal; when a board software of the mobile terminal is tampered, authentication between the hardware encryption device and the main control chip of the mobile terminal cannot be passed by using the authentication data stored in the hardware encryption device, and therefore, the hardware encryption device prohibits the main control chip from loading the stored important program codes, so that the mobile terminal fails to be started properly.
(2) Key data for implementing normal operation of the mobile terminal, for example, NV item data for controlling configuration of a mobile terminal frequency band or radio frequency control pin configuration information; when the authentication between the hardware encryption device and the main control chip of the mobile terminal fails, the main control chip cannot load the key data for implementing normal operation of the mobile terminal, so that the mobile terminal fails to implement specific functions.
(3) Network locking segment information of operators for implementing the SIM card locking function of the mobile terminal; and when authentication between the hardware encryption device and the main control chip of the mobile terminal succeeds, the main control chip determines whether the SIM card belongs to the segment of a specific operator according to the obtained network locking segment information of operators, thereby implementing the SIM card locking function of the mobile terminal.

To implement authentication between a hardware encryption device and a main control chip of a mobile terminal, hardware encryption technologies as common sense in the prior art may be used, such as a public and private key pair technology. In an embodiment of the present invention, board software summary information about a mobile terminal is stored in the hardware encryption device. During the authentication, as shown in FIG. 2, which is a schematic diagram of an authentication method, the method includes:
Step 21: A main control chip of a mobile terminal calculates board software summary information about the mobile terminal.
Step 22: The hardware encryption device compares stored board software summary information with the board software summary information about the mobile terminal calculated by the main control chip.
Step 23: Determine whether the comparison is correct.
Step 24: If the comparison is correct, the authentication succeeds.
Step 25: If the comparison is incorrect, the authentication fails.

In the preceding authentication scheme, when the codes in board software of the mobile terminal are tampered, the authentication fails due to the incorrect comparison of the summary information, so that the hardware encryption device prohibits the main control chip from loading encryption data stored in the hardware encryption device, and finally the mobile terminal fails to operate normally, thereby achieving the objective of preventing a hacker from easily acquiring key data of the mobile terminal.

It should be noted that, the hardware encryption device may authenticate with the main control chip of the mobile terminal each time when the main control chip starts or when the main control chip needs to use a certain function, for example, each time when the mobile terminal is connected to a network. In addition, the authentication may be performed once or multiple times.

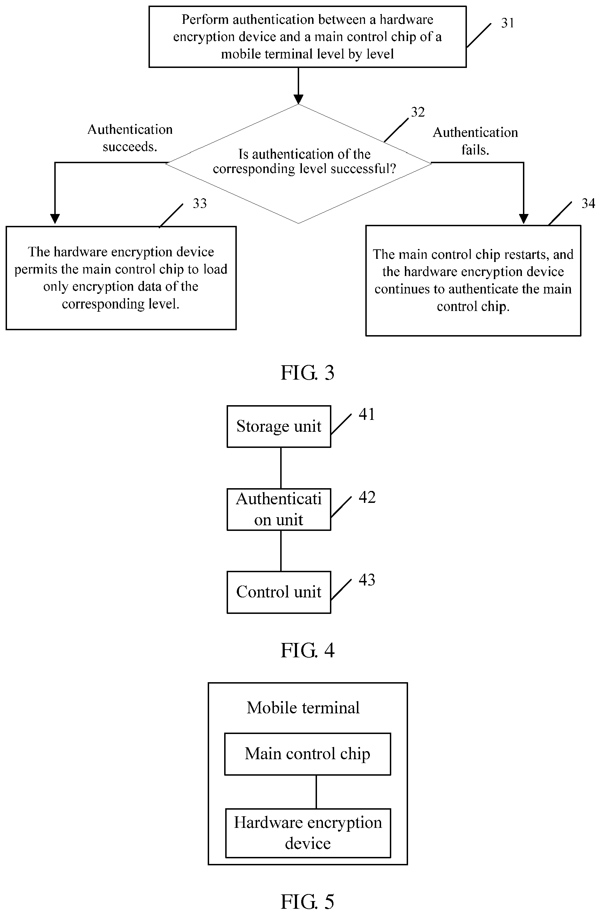

In an embodiment of the present invention, to further improve a security encryption level and anti-crack difficulty, an encryption level is set for the encryption data in the hardware encryption device. During the authentication, as shown in FIG. 3, which is a schematic diagram of an authentication method, the method includes:
Step 31: Perform authentication between a hardware encryption device and a main control chip of a mobile terminal level by level.
Step 32: Determine whether authentication of the corresponding level is successful.
Step 33: The hardware encryption device permits the main control chip to load only the encryption data of the corresponding level after the authentication of each level succeeds, and permits the main control chip to load all the encryption data until the authentication of all levels is passed, thereby implementing normal startup or normal operation of the mobile terminal.
Step 34: When the authentication of any level fails, the main control chip restarts, and the hardware encryption device continues to authenticate with the main control chip. When the number of failure times reaches a specified number, exception handling begins.

In another embodiment of the present invention, to further improve the security encryption level and anti-crack difficulty, a software encryption technology is used to encrypt encryption data stored in a hardware encryption device. In this way, even if a hacker cracks the encryption data stored in the hardware encryption device, the encryption data encrypted by using the software encryption technology may be used only after being further decrypted by the main control chip, thereby achieving the objective of preventing the hacker from easily acquiring the key data of the mobile terminal.

As shown in FIG. 4, an embodiment of the present invention provides a hardware encryption device, including:
a storage unit 41, configured to store authentication data and encryption data;
an authentication unit 42, configured to authenticate with a main control chip of a mobile terminal according to the authentication data stored by the storage unit 41; and
a control unit 43, configured to permit the main control chip to load the encryption data stored in the storage unit 41 if the authentication succeeds, and prohibit the main control chip from loading the encryption data stored in the storage unit 41 if the authentication fails.

The encryption data stored in the storage unit 41 includes but is not limited to one or more of the following: important program codes for implementing normal startup of the mobile terminal; and/or key data for implementing normal operation of the mobile terminal; and/or network locking segment information of operators for implementing the SIM card locking function of the mobile terminal.

For example, the encryption data may be NV item data for controlling configuration of a mobile terminal frequency band or radio frequency control pin configuration information; and when the authentication between the hardware encryption device and the main control chip of the mobile terminal fails, the main control chip cannot load the key data for implementing normal operation of the mobile terminal, so that the mobile terminal fails to implement specific functions.

For another example, the encryption data may be the network locking segment information of operators; and when authentication between the hardware encryption device and the main control chip of the mobile terminal succeeds, the main control chip determines whether a SIM card belongs to the segment of a specific operator according to the obtained network locking segment information of operators, thereby implementing the SIM card locking function of the mobile terminal.

In an embodiment, to implement authentication between the hardware encryption device and the main control chip of the mobile terminal, the authentication data stored in the storage unit 41 includes: board software summary information about the mobile terminal; at this time, the authentication unit 42 is specifically configured to compare board software summary information stored in the storage unit 41 with the board software summary information about the mobile terminal calculated by the main control chip of the mobile terminal; and determine the authentication succeeds if the comparison is correct, and determine the authentication fails if the comparison is incorrect. In this way, when codes in board software of the mobile terminal are tampered, the authentication fails due to incorrect comparison of summary information, and the control unit 43 prohibits the main control chip from loading the encryption data stored in the hardware encryption device, and finally the mobile terminal fails to operate normally.

In an embodiment, to further improve the security encryption level and anti-crack difficulty, an encryption level is set for the encryption data stored in the storage unit; and the control unit 43 is specifically configured to permit the main control chip to load the encryption data of the corresponding level after the authentication of each level succeeds, and permit the main control chip to load all the encryption data until the authentication of all levels succeeds.

In another embodiment, to further improve the security encryption level and anti-crack difficulty, a software encryption technology is used to encrypt the encryption data stored in the storage unit 41. In this way, even if a hacker cracks the encryption data stored in the hardware encryption device, the encryption data encrypted by using the software encryption technology may be used only after being further decrypted by the main control chip, thereby achieving the objective of preventing the hacker from easily acquiring the key data of the mobile terminal.

As shown in the preceding embodiments of the present invention, the hardware encryption device stores the authentication data and encryption data through the storage unit 41, and authenticates with the main control chip of the mobile terminal through the authentication unit 42. Only when the authentication succeeds, the control unit 43 permits the main control chip to load the encryption data. Therefore, terminal manufactures and operators may save key data of the mobile terminal as encryption data in the hardware encryption device according to different requirements, and protect the key data of the mobile terminal by using the hardware encryption technology, thereby achieving the objective of preventing a hacker from easily acquiring or tampering the key data of the mobile terminal.

As shown in FIG. 5, an embodiment of the present invention provides a mobile terminal, including: a main control chip and a hardware encryption device, where the main control chip is configured to authenticate with the hardware encryption device and to load encryption data stored in the hardware encryption device after the authentication succeeds, which are not described anymore herein.

The mobile terminal encryption method, the hardware encryption device, and the mobile terminal provided by the embodiments of the present invention may be used in a mobile terminal encryption technology and a network locking technology.

The preceding descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A mobile terminal encryption data loading method, comprising:
performing (11), according to stored authentication data, authentication between a hardware encryption device and a main control chip of a mobile terminal, wherein the hardware encryption device stores encryption data and the authentication data, wherein the encryption data comprises network locking segment information of operators for implementing a SIM card locking function of the mobile terminal, wherein the authentication data comprises board software summary information about the mobile terminal; and
the performing, according to stored authentication data, authentication between a hardware encryption device and a main control chip of a mobile terminal comprises:
comparing (22), by the hardware encryption device, stored board software summary information with the board software summary information about the mobile terminal calculated by the main control chip; and
determining (24) the authentication succeeds if the comparison is correct, and determining (25) the authentication fails if the comparison is incorrect;
permitting (12), by the hardware encryption device, the main control chip to load the encryption data if the authentication succeeds; and prohibiting (13), by the hardware encryption device, the main control chip from loading the encryption data if the authentication fails;
wherein the method further comprising: setting an encryption level for the encryption data;
the permitting, by the hardware encryption device, the main control chip to load the encryption data if the authentication succeeds comprises:
after the authentication of each level succeeds, permitting, by the hardware encryption device, the main control chip to load the encryption data of the corresponding level; and until the authentication of all levels succeeds, permitting, by the hardware encryption device, the main control chip to load all the encryption data.

2. The method according to claim 1, further comprising:
encrypting the encryption data by using a software encryption technology.

3. A hardware encryption device, comprising:
a storage unit (41), configured to store authentication data and encryption data;
an authentication unit (42), configured to authenticate with a main control chip of a mobile terminal according to the authentication data stored by the storage unit; and
a control unit (43), configured to permit the main control chip to load the encryption data stored in the storage unit if the authentication succeeds, and prohibit the main control chip from loading the encryption data stored in the storage unit if the authentication fails;
wherein the encryption data stored in the storage unit (41) comprises: network locking segment information of operators for implementing a SIM card locking function of the mobile terminal;
wherein the authentication data stored in the storage unit (41) comprises: board software summary information about the mobile terminal; and
the authentication unit (42) is specifically configured to compare board software summary information stored in the storage unit with the board software summary information about the mobile terminal calculated by the main control chip of the mobile terminal; and determine the authentication succeeds if the comparison is correct, and determine the authentication fails if the comparison is incorrect;
wherein an encryption level is set for the encryption data stored in the storage unit (41); and
the control unit (43) is specifically configured to permit the main control chip to load the encryption data of the corresponding level after the authentication of each level succeeds, and permit the main control chip to load all the encryption data until the authentication of all levels succeeds.

4. The hardware encryption device according to claim 3, wherein
the encryption data stored in the storage unit (41) is encrypted by using a software encryption technology.

## Patentansprüche

1. Datenladeverfahren für die Verschlüsselung von mobilen Endgeräten, umfassend:
Durchführen (11), gemäß gespeicherten Authentifizierungsdaten, einer Authentifizierung zwischen einer Hardwareverschlüsselungsvorrichtung und einem Hauptsteuerchip eines mobilen Endgeräts, wobei die Hardwareverschlüsselungsvorrichtung Verschlüsselungsdaten und die Authentifizierungsdaten speichert, wobei die Verschlüsselungsdaten Netzsperrungssegmentinformationen von Betreibern zum Umsetzen einer SIM-Karten-Sperrfunktion des mobilen Endgeräts umfassen, wobei die Authentifizierungsdaten Boardsoftwarezusammenfassungsinformationen über das mobile Endgerät umfassen; und
wobei das Durchführen, gemäß gespeicherten Authentifizierungsdaten, einer Authentifizierung zwischen einer Hardwareverschlüsselungsvorrichtung und einem Hauptsteuerchip eines mobilen Endgeräts Folgendes umfasst:
Vergleichen (22), durch die Hardwareverschlüsselungsvorrichtung, von gespeicherten Boardsoftwarezusammenfassungsinformationen mit den Boardsoftwarezusammenfassungsinformationen über das mobile Endgerät, die durch den Hauptsteuerchip berechnet werden; und
Bestimmen (24), dass die Authentifizierung erfolgreich ist, falls der Vergleich richtig ist, und Bestimmen (25), dass die Authentifizierung fehlschlägt, falls der Vergleich falsch ist; Zulassen (12), durch die Hardwareverschlüsselungsvorrichtung, dass der Hauptsteuerchip die Verschlüsselungsdaten lädt, falls die Authentifizierung erfolgreich ist; und Untersagen (13), durch die Hardwareverschlüsselungsvorrichtung, dass der Hauptsteuerchip die Verschlüsselungsdaten lädt, falls die Authentifizierung fehlschlägt;
wobei das Verfahren ferner Folgendes umfasst: Festlegen einer Verschlüsselungsebene für die Verschlüsselungsdaten;
wobei das Zulassen, durch die Hardwareverschlüsselungsvorrichtung, dass der Hauptsteuerchip die Verschlüsselungsdaten lädt, falls die Authentifizierung erfolgreich ist, Folgendes umfasst:
nachdem die Authentifizierung jeder Ebene erfolgreich ist, Zulassen, durch die Hardwareverschlüsselungsvorrichtung, dass der Hauptsteuerchip die Verschlüsselungsdaten der entsprechenden Ebene lädt; und bis die Authentifizierung aller Ebenen erfolgreich ist, Zulassen, durch die Hardwareverschlüsselungsvorrichtung, dass der Hauptsteuerchip alle Verschlüsselungsdaten lädt.

2. Verfahren nach Anspruch 1, ferner umfassend:
Verschlüsseln der Verschlüsselungsdaten durch Verwenden einer Softwareverschlüsselungstechnik.

3. Hardwareverschlüsselungsvorrichtung, umfassend:
eine Speichereinheit (41), die dazu konfiguriert ist, Authentifizierungsdaten und Verschlüsselungsdaten zu speichern;
eine Authentifizierungseinheit (42), die dazu konfiguriert ist, mit einem Hauptsteuerchip eines mobilen Endgeräts gemäß den durch die Speichereinheit gespeicherten Authentifizierungsdaten zu authentifizieren; und
eine Steuereinheit (43), die dazu konfiguriert ist, zuzulassen, dass der Hauptsteuerchip die in der Speichereinheit gespeicherten Verschlüsselungsdaten lädt, falls die Authentifizierung erfolgreich ist, und zu untersagen, dass der Hauptsteuerchip die in der Speichereinheit gespeicherten Verschlüsselungsdaten lädt, falls die Authentifizierung fehlschlägt;
wobei die in der Speichereinheit (41) gespeicherten Verschlüsselungsdaten Folgendes umfassen:
Netzsperrungssegmentinformationen von Betreibern zum Umsetzen einer SIM-Karten-Sperrfunktion des mobilen Endgeräts;
wobei die in der Speichereinheit (41) gespeicherten Authentifizierungsdaten Folgendes umfassen:
Boardsoftwarezusammenfassungsinformationen über das mobile Endgerät; und
wobei die Authentifizierungseinheit (42) spezifisch dazu konfiguriert ist, in der Speichereinheit gespeicherte Boardsoftwarezusammenfassungsinformationen mit den Boardsoftwarezusammenfassungsinformationen über das mobile Endgerät, die durch den Hauptsteuerchip des mobilen Endgeräts berechnet werden, zu vergleichen; und zu bestimmen, dass die Authentifizierung erfolgreich ist, falls der Vergleich richtig ist, und zu bestimmen, dass die Authentifizierung fehlschlägt, falls der Vergleich falsch ist;
wobei eine Verschlüsselungsebene für die in der Speichereinheit (41) gespeicherten Verschlüsselungsdaten festgelegt wird; und
wobei die Steuereinheit (43) spezifisch dazu konfiguriert ist, zuzulassen, dass der Hauptsteuerchip die Verschlüsselungsdaten der entsprechenden Ebene lädt, nachdem die Authentifizierung jeder Ebene erfolgreich ist, und zuzulassen, dass der Hauptsteuerchip alle Verschlüsselungsdaten lädt, bis die Authentifizierung aller Ebenen erfolgreich ist.

4. Hardwareverschlüsselungsvorrichtung nach Anspruch 3, wobei die in der Speichereinheit (41) gespeicherten Verschlüsselungsdaten durch Verwenden einer Softwareverschlüsselungstechnik verschlüsselt werden.

## Revendications

1. Procédé de chargement de données de chiffrement de terminal mobile, comprenant :
la réalisation (11), conformément à des données d'authentification stockées, d'une authentification entre un dispositif de chiffrement par matériel et une puce de commande principale d'un terminal mobile, dans lequel le dispositif de chiffrement par matériel stocke des données de chiffrement et les données d'authentification, dans lequel les données de chiffrement comprennent des informations de segment de verrouillage de réseau d'opérateurs permettant de mettre en œuvre une fonction de verrouillage de carte SIM du terminal mobile, dans lequel les données d'authentification comprennent des informations de résumé de logiciel de bord concernant le terminal mobile ; et
la réalisation, conformément à des données d'authentification stockées, d'une authentification entre un dispositif de chiffrement par matériel et une puce de commande principale d'un terminal mobile comprend :
la comparaison (22), par le dispositif de chiffrement par matériel, d'informations de résumé de logiciel de bord stockées avec les informations de résumé de logiciel de bord concernant le terminal mobile calculées par la puce de commande principale ; et
la détermination (24) du fait que l'authentification réussit si la comparaison est correcte, et la détermination (25) du fait que l'authentification échoue si la comparaison est incorrecte ;
la permission (12), par le dispositif de chiffrement par matériel, à la puce de commande principale de charger les données de chiffrement si l'authentification réussit ; et l'interdiction (13), par le dispositif de chiffrement par matériel, à la puce de commande principale de charger les données de chiffrement si l'authentification échoue ;
dans lequel le procédé comprend en outre : la définition d'un niveau de chiffrement pour les données de chiffrement ;
la permission, par le dispositif de chiffrement par matériel, à la puce de commande principale de charger les données de chiffrement si l'authentification réussit comprend :
après que l'authentification de chaque niveau a réussi, la permission, par le dispositif de chiffrement par matériel, à la puce de commande principale de charger les données de chiffrement du niveau correspondant ; et jusqu'à ce que l'authentification de tous les niveaux réussisse, la permission, par le dispositif de chiffrement par matériel, à la puce de commande principale de charger toutes les données de chiffrement.

2. Procédé selon la revendication 1, comprenant en outre :
le chiffrement des données de chiffrement en utilisant une technologie de chiffrement par logiciel.

3. Dispositif de chiffrement par matériel, comprenant :
une unité de stockage (41), conçue pour stocker des données d'authentification et des données de chiffrement ;
une unité d'authentification (42), conçue pour authentifier avec une puce de commande principale d'un terminal mobile conformément aux données d'authentification stockées par l'unité de stockage ; et
une unité de commande (43), conçue pour permettre à la puce de commande principale de charger les données de chiffrement stockées dans l'unité de stockage si l'authentification réussit, et interdire à la puce de commande principale de charger les données de chiffrement stockées dans l'unité de stockage si l'authentification échoue ;
dans lequel les données de chiffrement stockées dans l'unité de stockage (41) comprennent : des informations de segment de verrouillage de réseau d'opérateurs permettant de mettre en œuvre une fonction de verrouillage de carte SIM du terminal mobile ;
dans lequel les données d'authentification stockées dans l'unité de stockage (41) comprennent : des informations de résumé de logiciel de bord concernant le terminal mobile ; et
l'unité d'authentification (42) est conçue en particulier pour comparer des informations de résumé de logiciel de bord stockées dans l'unité de stockage avec les informations de résumé de logiciel de bord concernant le terminal mobile calculées par la puce de commande principale du terminal mobile ; et déterminer que l'authentification réussit si la comparaison est correcte, et déterminer que l'authentification échoue si la comparaison est incorrecte ;
dans lequel un niveau de chiffrement est défini pour les données de chiffrement stockées dans l'unité de stockage (41) ; et
l'unité de commande (43) est conçue en particulier pour permettre à la puce de commande principale de charger les données de chiffrement du niveau correspondant après que l'authentification de chaque niveau a réussi, et permettre à la puce de commande principale de charger toutes les données de chiffrement jusqu'à ce que l'authentification de tous les niveaux réussisse.

4. Dispositif de chiffrement par matériel selon la revendication 3, dans lequel
les données de chiffrement stockées dans l'unité de stockage (41) sont chiffrées en utilisant une technologie de chiffrement par logiciel.
